# FASCICULE DE BREVET EUROPEEN

(11) **EP 3 286 525 B1**
(45) Date de publication et mention de la délivrance du brevet: **18.11.2020**
(21) Numéro de dépôt: 16722294.2
(22) Date de dépôt: 20.04.2016
(51) Int. Cl.: G01C 19/72, B65H 55/04, G02B 6/36, G02B 6/44

(54) **PROCÉDÉ DE FABRICATION D'UNE BOBINE DE FIBRE OPTIQUE, BOBINE DE FIBRE OPTIQUE ET INTERFÉROMÈTRE À FIBRE OPTIQUE**
VERFAHREN ZUR HERSTELLUNG EINER GLASFASERSPULE, GLASFASERSPULE UND GLASFASERINTERFEROMETER
METHOD FOR PRODUCING AN OPTICAL FIBRE COIL, OPTICAL FIBRE COIL AND OPTICAL FIBRE INTERFEROMETER

(30) Priorité: 21.04.2015 FR 1553542
(43) Date de publication de la demande: 28.02.2018
(73) Titulaire: iXBlue, 78100 Saint-Germain-en-Laye (FR)
(72) Inventeur: GUATTARI, Frédéric, 93300 Aubervilliers (FR); SIMONPIETRI, Pascal, 95240 Cormeilles En Parisis (FR); CLAIRE, Alain, 95290 L'Isle Adam (FR)
(74) Mandataire: Jacobacci Coralis Harle
(86) Numéro de dépôt international: PCT/FR2016/050924
(87) Numéro de publication internationale: WO 2016/170271

(56) Documents cités:
- WO-A2-00/36441
- CN-A- 104 251 698
- JP-A- 2011 089 908
- US-A- 4 856 900
- JUN CHEN ET AL: "Enhanced environmental performance of fiber optic gyroscope by an adhesive potting technology", APPLIED OPTICS, vol. 54, no. 26, 2 septembre 2015 (2015-09-02), page 7828, XP055257616, WASHINGTON, DC; US ISSN: 0003-6935, DOI: 10.1364/AO.54.007828

## Description

### Domaine technique

La présente invention se rapporte aux capteurs basés sur une bobine de fibre optique, tels que les gyroscopes à fibre optique et à la fabrication de bobines de fibre optique utilisées dans ces capteurs.

Plus précisément, l'invention concerne un procédé de fabrication d'une bobine de fibre optique à enroulement symétrique qui permet de réduire les effets de non-réciprocités induites thermiquement.

### Etat de la technique

Un interféromètre à fibre optique en anneau de Sagnac permet de mesurer le déphasage entre deux ondes ayant parcouru une même bobine de fibre optique suivant des directions opposées. Ce type de capteur interférométrique est mis en œuvre dans un gyroscope à fibre optique où le déphasage mesuré permet d'en déduire une mesure de rotation autour de l'axe de la bobine. Un interféromètre à fibre optique en anneau de Sagnac peut aussi servir de capteur de champ magnétique, le déphasage étant fonction du champ magnétique par effet Faraday magnéto-optique (The Fiber-Optic Gyroscope, Hervé Lefèvre, Artech House).

Pour accroître la sensibilité d'un gyroscope à fibre optique, il est connu d'augmenter la longueur de la fibre optique dans la bobine, et donc le nombre de tours, ou spires, de la bobine de fibre.

Cependant, un gyroscope à fibre optique est soumis à des dérives dans le temps. De manière générale, on souhaite améliorer la stabilité d'un gyroscope à fibre optique, pour viser par exemple une dérive inférieure à 0,01 degré/heure. Cette stabilité implique en particulier une stabilité mécanique et thermique de la bobine de fibre optique.

La stabilité mécanique de la bobine est en général assurée par l'application d'une colle (potting material) sur la fibre optique au fur et à mesure du bobinage.

Par ailleurs, il est connu que les variations locales de température sont susceptibles d'induire des non réciprocités dans un capteur interférométrique à fibre optique en anneau de Sagnac (The Fiber-Optic Gyroscope, Hervé Lefèvre, Artech House, Chapter 6.1). Notamment, l'effet Shupe est dû aux différences locales de dérives thermiques à différents endroits de la bobine. En effet, une variation locale de température dans la fibre optique induit une variation locale d'indice de réfraction de la fibre optique qui produit un déphasage supplémentaire entre deux ondes contra-propagatives.

Il est possible de compenser les différences de température à des positions symétriques par rapport au milieu de la fibre optique. A cet effet, différents types d'enroulements symétriques de bobine ont été proposés dans lesquels le bobinage d'une fibre optique commence par le milieu de la fibre et se poursuit par alternance de couches provenant de chaque demi longueur de fibre optique. Ce type d'enroulement permet de placer les segments de la fibre symétriques par rapport au milieu de la fibre à proximité les uns des autres.

Dans le présent document, on entend par couche de spires (ou en bref couche), une ou plusieurs spires d'une bobine de fibre optique placées à une même distance de l'axe de la bobine de fibre optique. Dans une même couche, les spires proviennent en général d'une même demi-longueur de fibre et sont enroulées en hélice autour de l'axe de la bobine. On entend ici par demi longueur ou moitié de fibre optique, une partie de la fibre optique qui s'étend du milieu de la fibre optique, c'est-à-dire le point situé à équidistance des extrémités de la fibre optique, jusqu'à l'une des extrémités de la fibre optique.

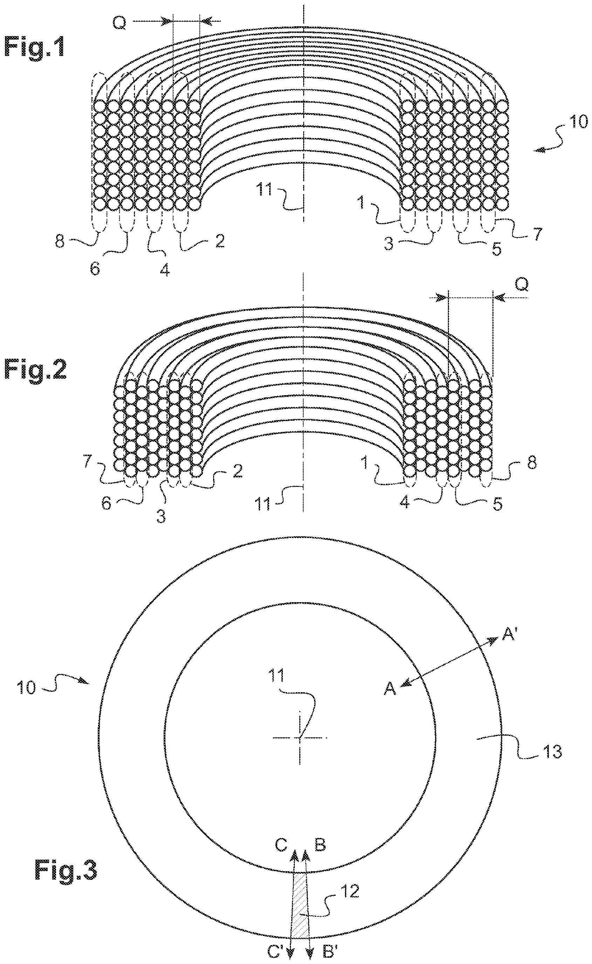

Ainsi, dans un enroulement symétrique de type dipolaire, on enroule alternativement, en partant du milieu de la fibre optique et en s'éloignant de l'axe de la bobine, une couche provenant d'une demi longueur de la fibre optique et une autre couche provenant de l'autre demi longueur de la fibre optique. La figure 1 illustre une vue en coupe d'une bobine 10 de fibre optique ayant un enroulement dipolaire. Les sections de fibre optique portant un numéro impair proviennent d'une première moitié de la fibre optique et les sections de fibre optique portant un numéro pair proviennent de la seconde moitié de la fibre optique. La première couche 1 de spires, qui est la plus proche de l'axe 11 de la bobine, comporte uniquement des spires provenant de la première moitié de la fibre optique. La deuxième couche 2 de spires, qui est disposée autour de la première couche 1 de spires, comporte uniquement des spires provenant de la seconde moitié de la fibre optique. Le motif Q ainsi formé de deux couches alternées est répété, de manière à ce que la bobine à enroulement dipolaire comporte un nombre total de couches égal à un multiple de deux. Ainsi, dans une bobine dipolaire les couches impaires 1, 3, 5, 7 proviennent toutes de la première moitié de fibre optique et les couches paires 2, 4, 6, 8 proviennent toutes de la seconde moitié de fibre optique.

Dans un enroulement symétrique quadripolaire, on répète périodiquement un motif constitué de quatre couches disposées comme suit en partant du milieu de la fibre optique et en s'éloignant de l'axe de la bobine : une première couche provenant d'une première demi longueur de la fibre optique, deux couches provenant de l'autre demi longueur de la fibre optique et une quatrième couche provenant de la première demi longueur de la fibre optique. La figure 2 illustre une vue en coupe d'une bobine 10 de fibre optique ayant un enroulement quadripolaire. Les mêmes signes de référence désignent les mêmes éléments que sur la figure 1. La première couche 1 de spires, qui est la plus proche de l'axe 11 de la bobine 10, comporte uniquement des spires provenant de la première moitié de la fibre optique. La deuxième couche 2 et la troisième couche 3, qui sont disposées autour de la première couche 1, comportent uniquement des spires provenant de la seconde moitié de la fibre optique. Une quatrième couche 4 de spires, disposée autour de la troisième couche 3 de spires, comporte uniquement des spires provenant de la première moitié de la fibre optique. Le motif Q ainsi formé de quatre couches est répété périodiquement, de manière à ce que la bobine à enroulement quadripolaire comporte un nombre total de couches égal à un multiple de quatre. Ainsi, dans une bobine quadripolaire les couches 1, 4, 5, 8 proviennent toutes de la première moitié de fibre optique et les couches 2, 3, 6, 7 proviennent toutes de la seconde moitié de fibre optique.

De manière analogue, dans un enroulement symétrique octopolaire, on répète périodiquement un motif constitué de huit couches disposées comme suit, en partant du milieu de la fibre optique et en s'éloignant de l'axe de la bobine : une première couche provenant d'une première moitié de la fibre optique, deux couches provenant de la seconde moitié de la fibre optique, une quatrième couche provenant de la première moitié de la fibre optique, une cinquième couche provenant de la seconde moitié de la fibre optique, deux couches provenant de la première moitié de la fibre optique et une huitième couche provenant de la seconde moitié de la fibre optique.

Le bobinage symétrique dipolaire, quadripolaire ou octopolaire permet de réduire l'effet Shupe.

Néanmoins, il existe d'autres effets induits thermiquement. En particulier, des variations temporelles du gradient de température peuvent induire des contraintes dans la bobine de fibre optique.

Une bobine de fibre optique a une structure composite constituée essentiellement d'une fibre optique enrobée par une colle, aussi appelée potting material. Dans le cas d'une bobine autoportée, la colle sert de support mécanique à la bobine. La colle représente environ 20% du volume d'une bobine de fibre optique. Les contraintes induites thermiquement dans une bobine de fibre optique dépendent notamment de l'homogénéité spatiale de cette bobine. Par exemple, la présence de bulles dans la colle est susceptible de produire des contraintes locales dissymétriques dans la bobine. Cependant, la modélisation des effets de contrainte dans une bobine de fibre optique est très complexe du fait de la structure composite de cette bobine. Le document US 4 856 900 A divulgue un enroulement comprenant deux zones d'empilement formant une surface d'étanchéité. La colle est appliquée vers la collerette de la bobine.

### Problème technique

Il existe donc un besoin d'un système et d'une méthode permettant de fabriquer une bobine de fibre optique ayant une grande stabilité mécanique et thermique dans le temps, qui présente une structure homogène spatialement, et en particulier une répartition spatiale homogène de la colle dans la bobine de fibre optique, sans bulle.

Un des buts de l'invention est d'augmenter la stabilité temporelle d'un gyroscope à fibre optique.

Un autre but de l'invention est d'améliorer l'homogénéité spatiale d'une bobine de fibre optique, afin de réduire les effets de contrainte et les dérives thermiques.

Un autre but de l'invention est d'augmenter la reproductibilité, la fiabilité et/ou la qualité d'un procédé de fabrication d'une bobine de fibre optique.

Plus précisément, un des buts de l'invention est de proposer un procédé d'encollage d'une bobine de fibre optique permettant d'obtenir, de manière fiable et reproductible, une bobine de fibre optique qui présente une structure homogène.

Encore un autre but de l'invention est de proposer un procédé d'encollage d'une bobine de fibre optique qui soit rapide.

La présente invention a pour but de remédier aux inconvénients de l'art antérieur et concerne plus particulièrement un procédé de fabrication d'une bobine de fibre optique à enroulement symétrique comprenant les étapes suivantes :
a. Enroulement d'une fibre optique autour d'un axe, l'enroulement commençant par un point de la fibre optique situé à équidistance des deux extrémités de la fibre optique, l'enroulement formant un motif comprenant un même nombre N de couches de chaque moitié de la fibre optique, où N est un entier naturel, une couche comprenant un ensemble de spires de fibre optique et des espaces situés entre spires adjacentes, les spires d'une couche provenant d'une même moitié de la fibre optique et étant placées à une même distance de l'axe de la bobine, et ledit enroulement formant une bobine ayant un arrangement sectorisé comprenant, d'une part, une zone d'empilement régulier où les spires de fibre optique d'une couche sont juxtaposées aux spires de la ou des couches adjacentes, de manière à former au moins une surface d'étanchéité continue entre deux couches de spires adjacentes et, d'autre part, une zone de chevauchement où se croisent des portions de fibre optique reliant différentes spires d'une même couche et/ou différentes couches de l'enroulement ;
b. Infiltration d'une colle dans la bobine à arrangement sectorisé à travers une surface externe de la zone de chevauchement de manière à ce que la colle s'infiltre par au moins une voie continue de communication dans les espaces situés entre spires adjacentes dans la zone d'empilement régulier, jusque ladite au moins une surface d'étanchéité.

Le procédé permet un encollage de la bobine de fibre optique après l'étape d'enroulement complet et non pas à chaque enroulement d'une couche de spires de la bobine. De plus, la répartition de la colle dans le volume de la bobine de fibre optique est plus homogène que la répartition obtenue suite à un procédé classique d'encollage de chaque spire et/ou de chaque couche de la bobine de fibre optique.

La meilleure homogénéité spatiale de la colle dans une bobine de fibre optique permet de réduire les contraintes induites par des variations de gradient de température dans la bobine de fibre optique. Au final, la stabilité d'un gyroscope à fibre optique basé sur une bobine de fibre optique résultant du procédé de fabrication de l'invention est améliorée et la dérive des mesures en fonction du temps est réduite.

Ce procédé permet une meilleure répétabilité des performances des bobines de fibre optique et donc une meilleure qualité du procédé de fabrication des bobines de fibre optique.

D'autre part, ce procédé facilite le design de la machine de bobinage et permet la visualisation de la bobine. Ces deux conditions sont indispensables pour l'automatisation du procédé.

Selon un aspect particulier et avantageux de l'invention, l'enroulement est de type quadripolaire ou octopolaire.

Selon un aspect particulier et avantageux de l'invention, les spires adjacentes d'une première couche sont disposées de manière à former un sillon entre spires adjacentes, et les spires d'une autre couche adjacente sont disposées en quinconce dans le sillon de la première couche dans la zone d'empilement régulier.

Selon un mode de réalisation particulier du procédé de fabrication, avant l'étape b) l'axe de la bobine de fibre optique est disposé horizontalement et la zone de chevauchement est disposée à la verticale de l'axe de la bobine, et l'étape b) comprend une étape b1) de dépôt de la colle sur la zone de chevauchement puis une étape b2) d'infiltration de la colle entre les spires de la bobine par gravité et/ou par capillarité et/ou par aspiration.

Selon un mode de réalisation particulier et avantageux du procédé de fabrication, avant l'étape b) la bobine de fibre optique est placée dans une enceinte à vide de manière à ce que l'espace entre les spires de la bobine soit sous vide, et l'étape b) comprend une étape de dépôt sous vide de la colle sur la zone de chevauchement ; puis une étape de rupture du vide dans l'enceinte à vide, de manière à ce que la colle s'infiltre par aspiration entre les spires de la bobine du fait d'une différence de pression entre l'enceinte à vide et les espaces situés entre les spires de la bobine.

L'invention concerne aussi une bobine de fibre optique à enroulement symétrique ayant un axe et comprenant une fibre optique, ladite fibre optique étant enroulée autour de l'axe de la bobine à partir du milieu de la fibre optique, l'enroulement de la fibre optique formant un motif comprenant un même nombre N de couches de chaque moitié de la fibre optique, où N est un entier naturel, une couche comprenant un ensemble de spires de fibre optique et d'espaces situés entre spires adjacentes, les spires d'une couche provenant d'une même moitié de la fibre optique et étant placées à une même distance de l'axe de la bobine.

Selon l'invention, l'enroulement forme une bobine ayant un arrangement sectorisé comprenant, d'une part, une zone d'empilement régulier où les spires de fibre optique d'une couche sont juxtaposées aux spires de la ou des couches adjacentes de manière à former au moins une surface d'étanchéité continue entre deux couches de spires, ladite au moins une surface d'étanchéité empêchant le passage d'air et/ou de colle entre une surface externe de la zone d'empilement régulier et au moins un espace situé entre les spires de la bobine dans la zone d'empilement régulier, et, d'autre part, une zone de chevauchement où se croisent des portions de fibre optique reliant différentes spires d'une même couche et/ou différentes couches de l'enroulement, la zone de chevauchement comprenant au moins une voie continue de communication entre une surface externe de la bobine dans la zone de chevauchement et lesdits espaces situés entre spires adjacentes de la zone d'empilement régulier et la bobine comportant de la colle répartie de manière spatialement homogène dans lesdits espaces situés entre spires adjacentes de la zone d'empilement régulier de la bobine.

Selon un mode de réalisation particulier et avantageux, le motif de l'enroulement est de type quadripolaire ou octopolaire.

De façon avantageuse, le motif de l'enroulement est répété périodiquement dans une direction transverse à l'axe de la bobine.

Selon un aspect particulier et avantageux de l'invention, le matériau de la colle est choisi parmi les matériaux suivants : polymère époxy ou acrylate.

L'invention concerne aussi un interféromètre à fibre optique en anneau de Sagnac comprenant au moins une bobine de fibre optique à enroulement symétrique et ayant un arrangement sectorisé selon l'un des modes de réalisation décrits.

L'invention trouvera une application particulièrement avantageuse dans la fabrication de bobines de fibre optique pour gyroscopes.

La présente invention concerne également les caractéristiques qui ressortiront au cours de la description qui va suivre et qui devront être considérées isolément ou selon toutes leurs combinaisons techniquement possibles.

Cette description donnée à titre d'exemple non limitatif fera mieux comprendre comment l'invention peut être réalisée en référence aux dessins annexés sur lesquels :
- la figure 1 représente schématiquement une vue en coupe d'une bobine de fibre optique ayant un enroulement dipolaire ;
- la figure 2 représente schématiquement une vue en coupe d'une bobine ayant un enroulement quadripolaire ;
- la figure 3 représente schématiquement une vue de dessus d'une bobine de fibre optique selon l'invention ;
- la figure 4 représente schématiquement une vue suivant une coupe AA' de la bobine de fibre optique illustrée sur la figure 3 ;
- la figure 5 représente schématiquement une vue suivant une coupe BB' de la bobine de fibre optique illustrée sur la figure 3 ;
- la figure 6 représente schématiquement une vue suivant une coupe CC' de la bobine de fibre optique illustrée sur la figure 3 ;
- les figures 7 et 8 illustrent le principe de l'infiltration de colle dans les interstices de la bobine à partir d'une surface extérieure de la zone de chevauchement de la bobine;
- les figures 9 à 11 illustrent différentes étapes d'un procédé de fabrication d'une bobine de fibre optique selon un mode de réalisation particulier de l'invention, assisté sous vide.

### Description détaillée

### Dispositif

On a représenté sur la figure 3, une vue de dessus d'une bobine de fibre optique 10 selon un mode de réalisation de l'invention. Le plan de la figure 3 est perpendiculaire à l'axe 11 de la bobine 10. La bobine 10 est à enroulement symétrique, par exemple de type quadripolaire ou octopolaire. La bobine 10 a une forme générale cylindrique d'axe 11 et de section annulaire dans un plan transverse à l'axe 11 de la bobine 10 et de section rectangulaire dans un plan passant par l'axe 11 de la bobine 10.

La fibre optique peut être de type monomode, multimode, polarisante, à maintien de polarisation, mono-cœur, multi-cœur... A titre d'exemple non limitatif, la fibre optique est à maintien de polarisation et le diamètre de la fibre optique (coeur + gaine ) est de 170 microns. La section de la fibre optique est en général circulaire.

Dans le présent document on distingue, d'une part, une bobine ayant un arrangement aléatoire et, d'autre part, une bobine ayant un arrangement sectorisé.

Dans une bobine à arrangement aléatoire, l'enroulement peut être symétrique, en commençant par le milieu de la fibre optique, mais les segments de fibres provenant des deux moitiés de fibre optique se croisent de manière aléatoire dans tout le volume de la bobine. Sur toute la surface d'une bobine à arrangement aléatoire, on observe des croisements de fibres, répartis de manière aléatoire.

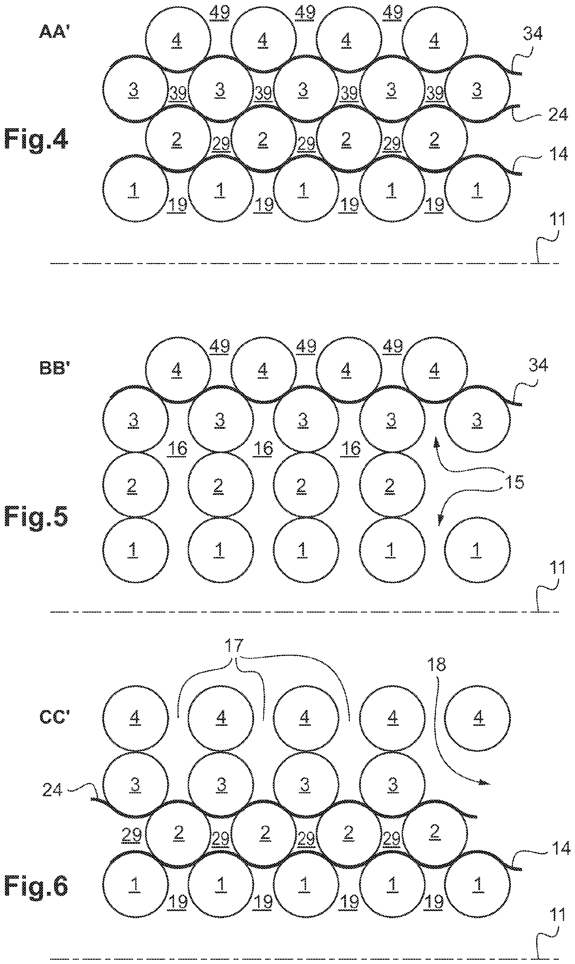

Au contraire, dans une bobine à arrangement sectorisé, la bobine comporte au moins deux zones séparées spatialement : une zone d'empilement régulier 13 et une zone de chevauchement 12. Dans la zone d'empilement régulier 13, les segments de fibre d'une couche sont empilés sur les segments de fibre de la couche immédiatement adjacente en étant disposés en quinconce dans les sillons formés entre les segments de la couche adjacente (Figures 2 et 4). Les deux demi-longueurs de fibre optique se croisent dans la zone de chevauchement 12 bien délimitée. Chaque couche correspond à des tours de l'enroulement qui tournent dans un même sens. Toutefois, contrairement à une vis, l'avancement entre tours d'une même couche dans la direction de l'axe de la bobine n'est pas en hélice, mais se fait par à coups : on enroule la fibre à plat selon un rayon pour faire un tour dans la zone d'empilement régulier 13, puis, dans la zone de chevauchement 12, on passe à la spire suivante de la même couche. De plus, l'avancement entre couches successives d'une même bobine à arrangement sectorisé n'est pas régulier non plus : on réalise une couche complète à une distance fixe de l'axe de la bobine correspondant à un rayon donné, puis on passe, au niveau de la zone de chevauchement 12, à la couche suivante qui a un rayon supérieur à celui de la couche sur laquelle elle s'enroule.

Dans la suite de la présente divulgation, on s'intéresse aux bobines à enroulement symétrique et ayant un arrangement sectorisé.

Dans un enroulement dipolaire, le sens d'enroulement des spires d'une couche, le long de l'axe de la bobine, change à chaque couche. On note ici K le numéro d'une couche, où K est un entier qui vaut 1 pour la couche la plus proche de l'axe de la bobine et 2N pour la couche la plus éloignée de l'axe de la bobine. La couche K+1 est fabriquée de la même manière que la couche K. Le sens d'enroulement de la couche K+1 est toujours inversé par rapport au sens d'enroulement de la couche K sur laquelle elle est posée. La couche K+1 vient se loger dans les sillons de la couche K (comme illustré sur la figure 4), sauf au niveau de la zone de chevauchement 12 où on passe à une autre couche. Dans une bobine à enroulement dipolaire ainsi formée, la zone de chevauchement 12 est unique.

Dans une bobine de type quadripolaire, la zone de chevauchement 12 comprend deux zones de chevauchement distinctes BB' et CC'. La zone BB' correspond à la localisation des chevauchements de spire entre les couches K+0 et K+1. La zone CC' correspond à la localisation des chevauchements de spire entre les couches K+2 et K+3. En effet, les fibres de passage inter-couche ne montent pas perpendiculairement à l'enroulement des fibres, les zones de chevauchement de spires des couches K+0 et K+1 ne sont donc pas à l'aplomb de la zone de chevauchement de spires des couches K+2 et K+3.

L'enroulement ainsi formé ne suit donc pas une hélice régulière à l'intérieur de chaque couche. Cet enroulement à arrangement sectorisé avec une zone de chevauchement 12 d'étendue limitée présente l'avantage de fournir un empilement régulier qui est étanche partout en dehors de la zone de chevauchement 12, c'est-à-dire étanche dans toute la zone d'empilement régulier 13. De façon particulièrement avantageuse, la zone de chevauchement 12 est limitée à un secteur angulaire limité de la bobine, correspondant par exemple à un secteur angulaire ayant un angle au sommet compris entre 10 et 20 degrés.

Plus précisément, une modélisation en trois dimensions d'une bobine 10 à enroulement symétrique et ayant un arrangement sectorisé permet de mettre en évidence l'arrangement des spires dans les différentes zones de la bobine.

L'analyse de la bobine suivant différents plans de coupe AA', BB', respectivement CC' fait apparaître différents arrangements de fibres entre les couches de la bobine de fibre.

La figure 4 représente schématiquement un exemple de vue suivant une coupe AA' de la bobine 10 de la figure 3. Le plan AA' est un plan qui inclue l'axe 11 de la bobine 10 et situé n'importe où dans la zone d'empilement régulier 13. Dans l'exemple simplifié illustré sur la figure 4, la bobine comporte quatre couches de spires. On a numéroté de 1 à 4 les sections de spires de fibre optique selon le numéro, respectivement de 1 à 4, de la couche correspondante.

On observe que dans le plan AA', les spires de la fibre optique ne sont pas disposées selon un empilement compact. On rappelle qu'un empilement compact de disques de même diamètre dans un plan correspond à un arrangement où un disque est en contact avec six disques adjacents, les centres des six disques étant disposés aux sommets d'un hexagone.

Au contraire, sur la figure 4, on observe que dans chaque couche, aucune spire n'est en contact avec les spires adjacentes de la même couche. Du fait de cet arrangement, il existe de l'espace entre les spires adjacentes d'une même couche. On note 19 les espaces entre spires adjacentes de la première couche 1, respectivement 29, 39, 49 les espaces entre spires adjacentes de la deuxième couche 2, troisième couche 3, et respectivement de la quatrième couche 4.

Les espaces 19, 29, 39, 49 permettent une tolérance de fabrication vis-à-vis des fluctuations de diamètre de la fibre le long du tirage, et/ou des variations de diamètre moyen de la fibre selon les tirages, et vis-à-vis des variations d'espacement entre les flasques du mandrin. Le contact de chaque spire d'une couche K+1 avec les deux spires de la couche K est nécessaire pour assurer la tension de fibrage durant l'enroulement de la fibre. Cette pression de tirage prend par exemple la valeur de 20g. Ainsi, les spires de la deuxième couche 2 sont en contact avec quatre autres spires : deux spires de la première couche et deux spires de la troisième couche 3. Les spires de la troisième couche 3 sont en contact avec quatre autres spires : deux spires de la deuxième couche 2 et deux spires de la quatrième couche 4. Enfin, les spires de la quatrième couche 4 sont en contact avec quatre autres spires : deux spires de la troisième couche 3, et deux spires de la couche 5 (non représentée).

En général, les espaces 19, 29, 39, 49 sont remplis de colle lors d'un procédé classique de fabrication, comprenant une étape d'application de colle après chaque enroulement de couche de spires.

En effet, il est possible de remplir l'espace vide entre spires d'une même couche en procédant à une étape d'encollage après l'enroulement de chaque couche. Toutefois, la technique classique de collage n'empêche pas que des bulles d'air puissent se trouver enfermées dans la couche de colle ainsi déposée.

Le plan de la figure 4 fait apparaître plusieurs lignes d'étanchéité 14, 24, 34, entre couches adjacentes. Ces lignes d'étanchéité 14, 24, 34 résultent des contacts entre spires de couches adjacentes dans la zone d'empilement régulier 13. Ainsi, une ligne d'étanchéité 14 se forme entre la couche 1 et la couche 2. Par symétrie de révolution de la figure 4 autour de l'axe de la bobine 11, en dehors de la zone de chevauchement, la ligne d'étanchéité 14 est la trace, dans le plan de la figure 4, d'une surface qui assure l'étanchéité entre les espaces 19 de la première couche 1 et les espaces 29 de la deuxième couche 2 dans toute la zone d'empilement régulier 13. De même, une autre ligne d'étanchéité 24 se forme entre la couche 2 et la couche 3, et encore une autre ligne d'étanchéité 34 se forme entre la couche 3 et la couche 4. La ligne d'étanchéité 24, respectivement 34, est la trace, dans le plan de la figure 4, d'une surface étanche qui s'étend, en dehors de la zone de chevauchement 12, dans toute la zone d'empilement régulier 13 de la bobine.

La présence de surfaces d'étanchéité 14, 24, 34 explique pourquoi il n'est généralement pas possible pour la colle de s'infiltrer après le bobinage complet d'une bobine de fibre optique, par une surface extérieure d'une bobine de fibre optique à enroulement symétrique et suivant un arrangement sectorisé. On observe aussi que lorsqu'une bulle d'air se forme dans un espace 29 ou respectivement 39, cette bulle d'air reste piégée entre les lignes d'étanchéité 14 et 24, ou respectivement entre les lignes d'étanchéité 24 et 34. Une telle bulle d'air crée une inhomogénéité spatiale dans la bobine de fibre optique, susceptible d'induire des variations de gradient thermique dans la fibre optique, à l'origine de non-réciprocités induites thermiquement dans les mesures interférométriques de déphasage.

Toutefois, il résulte de l'analyse suivante, que la répartition spatiale des sections de spires n'est pas uniforme dans la bobine de fibre optique d'enroulement symétrique et d'arrangement sectorisé, mais dépend du plan de coupe.

Ainsi, la figure 5 représente schématiquement une vue suivant une coupe BB' de la bobine 10 de la figure 3. Le plan BB' est un plan qui inclue l'axe 11 de la bobine 10 et qui est situé dans la zone de chevauchement 12 (ou zone de cross-over ou en anglais « jog zone »). Les mêmes éléments sont représentés par les mêmes signes de référence que sur la figure 4.

On observe que dans le plan BB', les spires de la fibre optique ne sont pas disposées selon le même empilement que sur la figure 4.

Au contraire, sur la figure 5, on observe que les spires des couches 1, 2 et 3 sont empilées régulièrement suivant des plans transverses à l'axe 11 de la bobine. Ainsi, les spires de la première couche 1 sont en contact avec au plus une autre spire de la deuxième couche 2. Les spires de la deuxième couche 2 sont en contact avec au plus deux autres spires : une spire de la première couche et une spire de la troisième couche 3. Les spires de la troisième couche 3 sont en contact avec au plus trois autres spires : au plus une spire de la deuxième couche 2 et au plus deux spires de la quatrième couche 4. Enfin, les spires de la quatrième couche 4 sont en contact avec au plus deux autres spires de la troisième couche 3. Sur la figure 5 comme sur la figure 4, dans chaque couche, aucune spire n'est en contact avec les spires adjacentes de la même couche.

L'arrangement de la figure 5 fait apparaître une ligne d'étanchéité 34 entre la dernière couche 4 et l'avant-dernière couche 3, qui prolonge la ligne d'étanchéité 34 de la figure 4. La figure 5 met en évidence l'existence des ouvertures 15, 16 qui communiquent entre les couches 1, 2 et 3. Or, dans une même bobine 10, ces ouvertures 15, 16 communiquent avec les espaces 19, 29 et 39 représentés sur la figure 4 dans le plan de coupe AA'.

Cette analyse permet d'envisager la réalisation d'une infiltration de colle à partir des ouvertures 15 et/ou 16 dans le plan de coupe BB'. La colle injectée dans les ouvertures 15, 16 peut s'infiltrer jusque dans les espaces 19, 29, 39, par exemple par capillarité. Par effet inverse, les ouvertures 15, 16 peuvent aussi être utilisées pour chasser de l'air piégé dans les espaces 19, 29 et/ou 39. Il découle de la présente analyse, que la colle peut s'infiltrer après le bobinage complet d'une bobine de fibre optique, notamment à travers la première couche 1, c'est-à-dire par l'intérieur de la bobine, dans le plan BB'.

Néanmoins, du fait de la présence d'une ligne d'étanchéité 34, les ouvertures 15 et 16 ne communiquent pas avec les espaces 49 entre les spires de la dernière couche 4. Il n'est donc pas possible pour la colle de s'infiltrer après le bobinage complet d'une bobine de fibre optique, à travers la dernière couche 4, c'est-à-dire par l'extérieur de la bobine, dans le plan BB'.

D'autre part, la figure 6 représente schématiquement une vue suivant une coupe CC' de la bobine 10 de la figure 3. Le plan CC' est un plan qui inclue l'axe 11 de la bobine 10 et qui est situé dans la zone de chevauchement 12. Les mêmes éléments sont représentés par les mêmes signes de référence que sur les figures 4 et 5.

Dans le plan CC', on observe que les spires de la fibre optique ne sont pas disposées suivant l'empilement représenté sur la figure 4 ni selon l'empilement représenté sur la figure 5.

Au contraire, sur la figure 6, on observe que les spires des couches 1, 2 et 3 sont décalées les unes par rapport aux autres (empilement en quinconce dans les sillons de la couche précédente) tandis que les spires des couches 3 et 4 sont alignées suivant un axe transverse à l'axe de la bobine (empilement en cercles concentriques). Ainsi, les spires de la première couche 1 sont en contact avec au plus deux autres spires de la deuxième couche 2. Les spires de la deuxième couche 2 sont en contact avec au plus quatre autres spires : au plus deux spires de la première couche et au plus deux spires de la troisième couche 3. Les spires de la troisième couche 3 sont en contact avec au plus trois autres spires : au plus deux spires de la deuxième couche 2 et une spire de la quatrième couche 4. Enfin, les spires de la quatrième couche 4 sont en contact avec au plus une autre spire de la troisième couche 3. Sur la figure 6 comme sur les figures 4 et 5, dans chaque couche, aucune spire n'est en contact avec les spires adjacentes de la même couche.

L'arrangement de la figure 6 fait apparaître une ligne d'étanchéité 14 entre la première couche 1 et la deuxième couche 2, et respectivement une autre ligne d'étanchéité 24 entre la deuxième couche 2 et la troisième couche 3. Ces lignes d'étanchéité 14, 24 sont dans le prolongement continu des lignes d'étanchéité 14, 24 de la figure 4.

La figure 6 met en évidence l'existence d'ouvertures 17 qui communiquent entre les couches 3 et 4 et d'une ouverture 18 qui communique entre les couches 2, 3 et 4.

Ici aussi, dans une même bobine 10, les ouvertures 17, 18 communiquent avec les espaces 29, 39 et 49 représentés sur la figure 4 dans le plan de coupe AA', ainsi qu'avec les ouvertures 15, 16 représentés sur la figure 5 dans le plan de coupe BB'. Néanmoins, du fait de la présence d'une ligne d'étanchéité 14, respectivement 24, les ouvertures 17 et 18 ne communiquent pas avec les espaces 19, respectivement 29, situés entre les spires de la première couche 1, respectivement de la deuxième couche 2. Il n'est donc pas possible pour la colle de s'infiltrer après le bobinage complet d'une bobine de fibre optique, à travers la première couche 1 et la deuxième couche 2, c'est-à-dire par l'intérieur de la bobine, dans le plan CC'.

De manière surprenante, la faible distance entre les ouvertures 15, 16 dans le plan BB' et des ouvertures 17, 18 dans le plan CC' permet d'envisager la faisabilité d'une infiltration de colle à partir des ouvertures 17 et/ou 18 dans le plan de coupe CC'. La colle injectée dans les ouvertures 17 et/ou 18 peut s'infiltrer jusque dans les espaces 19, 29, 39, et les ouvertures 15, 16, par exemple par capillarité. Par effet inverse, les ouvertures 17, 18 peuvent aussi être utilisées pour chasser de l'air piégé dans les espaces 29, 39 et/ou 49.

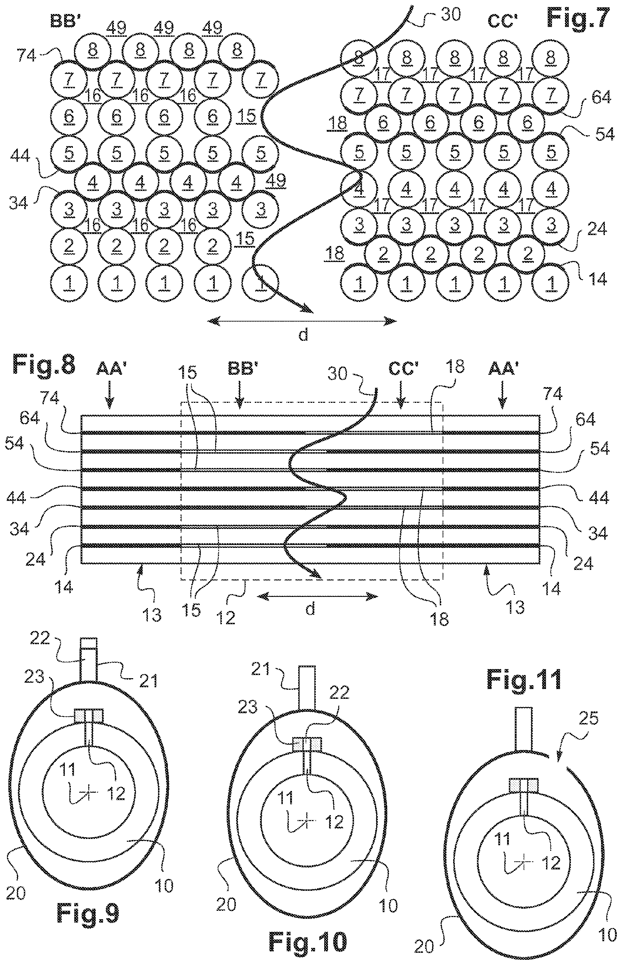

La figure 7 représente une vue en coupe d'une zone de chevauchement 12 dans une bobine à enroulement quadripolaire comprenant huit couches de spires. Les plans BB' et CC' sont situés de part et d'autre de la zone de chevauchement 12. Du côté du plan BB' on observe des lignes d'étanchéité 34 (entre les couches 3 et 4), 44 (entre les couches 4 et 5) et 74 (entre les couches 7 et 8). Du côté du plan CC' on observe des lignes d'étanchéité 14 (entre les couches 1 et 2), 24 (entre les couches 2 et 3), 54 (entre les couches 5 et 6) et 64 (entre les couches 6 et 7).

Sur la figure 7, on constate qu'il y a toujours deux lignes d'étanchéité par groupe de quatre couches sur les plan BB' et CC' (au lieu de quatre lignes d'étanchéité par groupe de quatre couches sur AA').

Cependant, les lignes d'étanchéité de BB' ne sont pas continues avec les lignes d'étanchéité de CC'. D'autre part, les zones d'ouvertures 15, 18 sont proches l'une de l'autre. Dans un exemple de réalisation, l'étendue de la zone de chevauchement 12, dans une direction transverse à l'axe de la bobine est de l'ordre du centimètre. Ainsi, une colle 22 peut s'infiltrer depuis la couche externe 8 jusque la couche interne 1 de la bobine en suivant un chemin 30 continu en slalom, représenté schématiquement sur les figures 7 et 8. On déduit de la présente analyse, qu'une colle 22 suffisamment fluide a la possibilité de s'infiltrer après le bobinage complet d'une bobine de fibre optique, notamment à travers la dernière couche, c'est-à-dire par l'extérieur de la bobine, entre les plans BB' et CC' et/ou à travers la première couche 1, c'est-à-dire par l'intérieur de la bobine, entre les plans BB' et CC'.

L'homme du métier appliquera aisément un tel arrangement à une bobine ayant un enroulement symétrique de type octopolaire, la bobine ayant un arrangement sectorisé comprenant d'une part une zone d'empilement régulier, qui présente des lignes d'étanchéité entre les différentes couches, et au moins une zone de chevauchement, à l'intérieur de laquelle les lignes d'étanchéité sont disjointes, et qui permet une infiltration de colle à partir d'une surface extérieure de la bobine.

### Procédé

Le procédé de fabrication d'une bobine de fibre optique comporte une première étape de bobinage d'une fibre optique autour d'un mandrin.

De préférence, l'enroulement de la fibre optique est un enroulement symétrique par rapport au point milieu de la fibre optique. A cet effet, on détermine le point milieu de la fibre optique, c'est-à-dire le point situé à mi-distance des deux extrémités de la fibre optique. On fixe le point milieu sur le mandrin, et on commence l'enroulement à partir de ce point milieu. On commence par enrouler une première couche provenant d'une première moitié de la fibre optique. On poursuit l'enroulement des couches suivantes de manière à former un motif comprenant un même nombre N de couches de chaque moitié de la fibre optique, où N est un entier naturel. L'enroulement ainsi formé est symétrique par rapport à un plan comprenant l'axe de la bobine et le milieu de la fibre optique.

Avantageusement, le motif est de type quadripolaire ou octopolaire.

Le motif peut être répété périodiquement en s'éloignant de l'axe de la bobine, afin d'augmenter le nombre de tours de la bobine.

L'enroulement forme un arrangement sectorisé, la bobine comportent au moins deux zones séparées spatialement : une zone d'empilement régulier 13 et une zone de chevauchement 12. De préférence, on limite l'étendue de la zone de chevauchement 12 par rapport à celle de la zone d'empilement régulier 13.

Le passage d'une spire à une autre spire de la même couche s'effectue dans la zone de chevauchement 12. A cet effet, l'enroulement des spires à l'intérieur d'une couche se fait dans des plans transverses à l'axe de la bobine et non pas en hélice. De même, le passage d'une couche à la couche suivante du motif s'effectue dans la zone de chevauchement 12.

On obtient ainsi une bobine de fibre optique qui présente des espaces 19, 29, 39, 49 dans un plan AA' quelconque de la zone d'empilement régulier 13. Dans la zone de chevauchement 12, la bobine de fibre optique présente des ouvertures 15, 16 dans un plan BB' et des ouvertures 17, 18 dans un plan CC'. A ce stade de fabrication, les espaces 19, 29, 39, 49 sont vides. Les ouvertures 15, 16, 17, 18 sont également vides.

L'encollage de la bobine de fibre optique s'effectue après la fin du bobinage, c'est-à-dire après l'enroulement de toutes les spires de la bobine 10, contrairement aux techniques dans lesquelles l'encollage est effectué après l'enroulement de chaque couche de spires.

On détermine l'emplacement de la zone de chevauchement 12 située entre les plans BB' et CC'. Cette zone de chevauchement 12 est identifiable, par exemple sur l'extérieur de la bobine, car c'est la zone où les deux moitiés de fibre optique de la bobine se croisent. Les deux extrémités de la fibre optique peuvent sortir de la bobine dans la zone de chevauchement 12 ou à un autre emplacement 13 de la bobine, cet autre emplacement 13 étant situé en dehors de la zone de chevauchement 12. Dans un exemple de réalisation, la zone de chevauchement 12 s'étend sur une largeur de 1 à 3 cm sur la surface externe d'une bobine ayant un diamètre extérieur de l'ordre de dix à vingt centimètres. La largeur est ici mesurée dans une direction transverse à l'axe de la bobine.

Le procédé comporte ensuite une étape d'infiltration de colle suivant un chemin 30 qui part d'une surface extérieure de la bobine et traverse la zone de chevauchement 12.

Comme illustré sur les figures 7 et 8, l'infiltration de colle peut s'effectuer depuis la couche externe 8 à travers la zone de chevauchement 12 suivant un chemin 30 en zigzag entre les lignes d'étanchéité des plans BB' et CC'. La largeur *d* de la zone du chemin 30 en zigzag est de l'ordre du cm (environ les 2/3 de la longueur de la zone 12). La colle peut aussi être infiltrée suivant le chemin inverse, depuis la couche interne 1 à travers la zone de chevauchement 12 suivant le chemin 30 inverse en zigzag. Ainsi, la colle s'infiltre par les deux côtés de la bobine dans les espaces entre les spires. L'air présent initialement dans les espaces entre les lignes d'étanchéité peut être chassé via les ouvertures de la zone de chevauchement 12.

L'infiltration de colle peut se faire à pression ambiante.

Dans un premier mode de réalisation, la bobine 10 est disposée de manière à ce que son axe 11 soit horizontal. Dans une première variante du premier mode de réalisation, la zone de chevauchement est placée au dessus de l'axe 11, par exemple à la verticale de l'axe 11. On place ensuite la colle en contact avec les ouvertures de la zone de chevauchement 12 sur la couche extérieure de la bobine. La colle s'infiltre par des ouvertures dans la zone de chevauchement 12 puis se propage par capillarité et/ou par effet de la gravité dans les espaces 19, 29, 39, 49... entre les spires de la bobine et dans les autres ouvertures 15, 16 de la zone de chevauchement.

Dans une deuxième variante du premier mode de réalisation, la zone de chevauchement est placée en dessous de l'axe 11, par exemple à la verticale de l'axe 11. On place ensuite la colle en contact avec les ouvertures de la zone de chevauchement 12 sur la première couche 1 à l'intérieur de la bobine. La colle s'infiltre par des ouvertures de la zone de chevauchement 12 puis se propage par capillarité et/ou par effet de la gravité dans les espaces 19, 29, 39, 49... entre les spires de la bobine et dans les autres ouvertures de la zone de chevauchement.

On réalise ainsi l'encollage entre les spires et entre les couches de la bobine de fibre optique dans tout le volume de la bobine après le bobinage complet de la bobine.

Dans un autre mode de réalisation particulier et avantageux, décrit en lien avec les figures 9 à 11, l'infiltration de colle est réalisée dans une enceinte à vide.

Sur la figure 9 on a représenté une bobine de fibre optique 10 après enroulement de la fibre optique et avant l'encollage.

La bobine 10 est disposée à l'intérieur d'une enceinte à vide 20. Un système de pompage (non représenté), comprenant par exemple une ou plusieurs pompes à vide reliées fluidiquement à l'enceinte à vide 20, permet d'obtenir un vide primaire dans l'enceinte à vide 20. La bobine 10 étant placée dans l'enceinte à vide, le vide se forme également entre les spires de la bobine, via les ouvertures 15, 16, 17 et 18, qui communiquent avec l'enceinte à vide. Comme indiqué plus haut, les ouvertures 15, 16, 17 et/ou 18 communiquent aussi avec les espaces 19, 29, 39, 49 ... entre les spires de la bobine. Le vide se forme ainsi dans tous les espaces interspires de la bobine.

Un récipient 21 contient de la colle sous forme de liquide ou de gel. A ce stade du procédé, le récipient 21 contenant la colle 22 est à l'extérieur de l'enceinte à vide 20. A titre d'exemple, la colle choisie est un polymère époxy ou acrylate.

Autour de la zone de chevauchement 12 de la bobine 10, on a disposé une bague 23 destinée à retenir la colle au contact d'au moins une partie de la zone de chevauchement 12, et plus précisément autour de la zone CC' qui comporte des ouvertures 17, 18 communiquant avec l'extérieur de la bobine. Dans l'exemple de la figure 9, la bague est disposée sur la couche externe de la bobine parallèlement à l'axe 11 de la bobine 10.

La figure 10 illustre une autre étape du procédé dans laquelle la colle 22 est introduite dans l'enceinte à vide 20, l'enceinte 20 restant sous vide. La colle 22 est ainsi placée en contact avec la zone de chevauchement 12. Plus précisément, la colle 22 est en contact avec les ouvertures 17 et/ou 18 de la couche externe de la bobine. Dans un mode de réalisation, la colle 22 recouvre toutes les ouvertures 17 et 18. Dans un autre mode de réalisation, la colle 22 recouvre une partie des ouvertures 17 ou 18.

La figure 11 illustre une étape suivante du procédé dans laquelle on casse le vide de l'enceinte 20, par exemple en créant une ouverture 25 entre l'enceinte à vide et l'air ambiant. Suite au changement de pression dans l'enceinte à vide, la colle 22 est aspirée dans les interstices de la bobine à travers les ouvertures 17 et/ou 18. La colle remplit ainsi pleinement tous les espaces 19, 29, 39, 49 et toutes les ouvertures 15, 16, 17, 18.

Le procédé d'infiltration de colle assisté sous vide permet de limiter le risque de piéger des bulles d'air à l'intérieur de la bobine de fibre optique.

Ce mode de réalisation assisté sous vide permet un plus large choix de colle car la force d'aspiration de la bobine est plus grande et permet l'emploi de colle relativement plus visqueuse. Le procédé d'encollage assisté sous vide est rapide comparé à un encollage de chaque couche de bobine, en particulier pour les bobines ayant un grand nombre de couches.

On obtient, de manière facilement répétable, une bobine de fibre optique à enroulement symétrique ayant une structure particulièrement homogène dans la volume de la bobine.

## Revendications

1. Procédé de fabrication d'une bobine (10) de fibre optique à enroulement symétrique comprenant les étapes suivantes :
a. Enroulement symétrique d'une fibre optique autour d'un axe (11), l'enroulement commençant par un point de la fibre optique situé à équidistance des deux extrémités de la fibre optique, l'enroulement formant un motif comprenant un même nombre N de couches de chaque moitié de la fibre optique, où N est un entier naturel, une couche comprenant un ensemble de spires de fibre optique et des espaces (19, 29, 39, 49) situés entre spires adjacentes, les spires d'une couche provenant d'une même moitié de la fibre optique et étant placées à une même distance de l'axe (11) de la bobine, et ledit enroulement formant une bobine (10) ayant un arrangement sectorisé comprenant, d'une part, une zone d'empilement régulier (13) où les spires de fibre optique d'une couche sont juxtaposées aux spires de la ou des couches adjacentes, de manière à former au moins une surface d'étanchéité (14, 24, 34) continue entre deux couches de spires adjacentes, ladite au moins une surface d'étanchéité (14, 24, 34) empêchant le passage d'air et/ou de colle entre une surface externe de la zone d'empilement régulier (13) et au moins un espace (19, 29, 39, 49) situé entre les spires de la bobine dans la zone d'empilement régulier (13), et, d'autre part, une zone de chevauchement (12) où se croisent des portions de fibre optique reliant différentes spires d'une même couche et/ou différentes couches de l'enroulement, la zone de chevauchement (12) comprenant au moins une voie continue de communication (15, 16, 17, 18) entre une surface externe de la bobine dans la zone de chevauchement (12) et lesdits espaces (19, 29, 39, 49) situés entre spires adjacentes de la zone d'empilement régulier (13) ;
b. Infiltration d'une colle (22) dans la bobine à arrangement sectorisé à travers une surface externe de la zone de chevauchement (12) de manière à ce que la colle (12) s'infiltre par au moins une voie continue de communication (15, 16, 17, 18, 30) dans les espaces (19, 29, 39, 49) situés entre spires adjacentes dans la zone d'empilement régulier (13), jusque ladite au moins une surface d'étanchéité (14, 24, 34).

2. Procédé de fabrication d'une bobine de fibre optique selon la revendication 1 dans lequel à l'étape a) le motif de l'enroulement est de type quadripolaire ou octopolaire.

3. Procédé de fabrication d'une bobine de fibre optique selon l'une des revendications 1 à 2 dans lequel les spires adjacentes d'une première couche sont disposées de manière à former un sillon entre spires adjacentes, et dans lequel les spires d'une autre couche adjacente sont disposées en quinconce dans le sillon de la première couche dans la zone d'empilement régulier (13).

4. Procédé de fabrication d'une bobine de fibre optique selon l'une des revendications 1 à 3 dans lequel, avant l'étape b) l'axe (11) de la bobine de fibre optique est disposé horizontalement et la zone de chevauchement (12) est disposée à la verticale de l'axe de la bobine, et dans lequel l'étape b) comprend une étape b1) de dépôt de la colle (22) sur la zone de chevauchement (12) puis une étape b2) d'infiltration de la colle (22) entre les spires de la bobine par gravité et/ou par capillarité et/ou par aspiration.

5. Procédé de fabrication d'une bobine de fibre optique selon l'une des revendications 1 à 4 dans lequel, avant l'étape b) la bobine de fibre optique est placée sous vide dans une enceinte à vide (20) de manière à ce que les espaces (19, 29, 39, 49) entre les spires de la bobine soient sous vide, et dans lequel l'étape b) comprend une étape de dépôt sous vide de la colle (22) sur la zone de chevauchement (12) ; puis une étape de rupture du vide dans l'enceinte à vide (20), de manière à aspirer la colle (22) entre les spires de la bobine du fait d'une différence de pression entre l'enceinte à vide (20) et les espaces situés (19, 29, 39, 49) entre les spires de la bobine.

6. Bobine de fibre optique (10) à enroulement symétrique ayant un axe (11) et comprenant une fibre optique, ladite fibre optique étant enroulée autour de l'axe (11) de la bobine à partir du milieu de la fibre optique, l'enroulement de la fibre optique formant un motif (Q) comprenant un même nombre N de couches (1, 2, 3, 4) de chaque moitié de la fibre optique, où N est un entier naturel, chacune des couches (1, 2, 3, 4) comprenant un ensemble de spires de fibre optique et des espaces (19, 29, 39, 49) situés entre spires adjacentes, les spires d'une couche provenant d'une même moitié de la fibre optique et étant placées à une même distance de l'axe (11) de la bobine,
**caractérisée en ce que** :
ledit enroulement forme une bobine (10) ayant un arrangement sectorisé comprenant, d'une part, une zone d'empilement régulier (13) où lesdites spires de fibre optique d'une couche sont juxtaposées aux spires de la ou des couches adjacentes de manière à former au moins une surface d'étanchéité (14, 24, 34) continue entre deux couches de spires, ladite au moins une surface d'étanchéité (14, 24, 34) empêchant le passage d'air et/ou de colle entre une surface externe de la zone d'empilement régulier (13) et au moins un espace (19, 29, 39, 49) situé entre les spires de la bobine dans la zone d'empilement régulier (13), et, d'autre part, une zone de chevauchement (12) où se croisent des portions de fibre optique reliant différentes spires d'une même couche et/ou différentes couches de l'enroulement, la zone de chevauchement (12) comprenant au moins une voie continue de communication (15, 16, 17, 18) entre une surface externe de la bobine dans la zone de chevauchement (12) et lesdits espaces (19, 29, 39, 49) situés entre spires adjacentes de la zone d'empilement régulier (13) et **en ce que** la bobine comporte de la colle (22) répartie de manière spatialement homogène dans lesdits espaces (19, 29, 39, 49) situés entre spires adjacentes de la zone d'empilement régulier (13) de la bobine.

7. Bobine de fibre optique (10) selon la revendication 6 dans laquelle le motif (Q) de l'enroulement est de type quadripolaire ou octopolaire.

8. Bobine de fibre optique selon la revendication 6 ou 7 dans laquelle le motif (Q) de l'enroulement est répété périodiquement dans une direction transverse à l'axe (11) de la bobine.

9. Bobine de fibre optique selon l'une des revendications 6 à 8 dans lequel le matériau de la colle est choisi parmi les matériaux suivants : polymère époxy ou acrylate.

10. Bobine de fibre optique selon l'une des revendications 6 à 9 dans lequel la fibre optique est une fibre optique monomode, une fibre optique à maintien de polarisation, une fibre optique multi-cœur.

11. Interféromètre à fibre optique en anneau de Sagnac comprenant au moins une bobine de fibre optique selon l'une des revendications 6 à 10.

## Patentansprüche

1. Verfahren zur Herstellung einer Glasfaserspule (10) mit symmetrischer Wicklung mit den folgenden Schritten:
a. symmetrisches Wickeln einer Glasfaser um eine Achse (11), wobei das Wickeln an einem Punkt der Glasfaser beginnt, der von den beiden Enden der Glasfaser gleich weit entfernt ist, wobei das Wickeln ein Motiv schafft, das eine gleiche Anzahl N Lagen jeder Hälfte der Glasfaser aufweist, wobei N eine natürliche ganze Zahl ist, wobei eine Lage eine Gesamtheit von Glasfaserwindungen und Zwischenräume (19, 29, 39, 49) zwischen aneinander angrenzenden Windungen aufweist, wobei die Windungen einer Lage von einer selben Hälfte der Glasfaser kommen und sich in einer selben Entfernung von der Achse (11) der Spule befinden, und wobei die Wicklung eine Spule (10) mit sektorisierter Anordnung bildet, die einerseits eine Zone mit regelmäßiger Schichtung (13), bei der die Glasfaserwindungen einer Schicht und die Windungen der angrenzenden Schicht bzw. Schichten nebeneinander angeordnet sind, um wenigstens eine durchgehende Dichtfläche (14, 24, 34) zwischen zwei Schichten aneinander angrenzender Windungen zu bilden, wobei die wenigstens eine Dichtfläche (14, 24, 34) das Durchfließen von Luft und/oder Klebstoff zwischen einer Außenfläche der Zone mit regelmäßiger Schichtung (13) und wenigstens einem zwischen den Windungen der Spule in der Zone mit regelmäßiger Schichtung (13) liegenden Zwischenraum (19, 29, 39, 49) verhindert, und andererseits eine Überlappungszone (12), in der sich die verschiedene Windungen einer selben Schicht und/oder verschiedener Schichten der Wicklung verbindende Glasfaserabschnitte kreuzen, wobei die Überlappungszone (12) wenigstens einen durchgehenden Verbindungsweg (15, 16, 17, 18) zwischen einer Außenfläche der Spule in der Überlappungszone (12) und den zwischen aneinander angrenzenden Windungen der Zone mit regelmäßiger Schichtung (13) befindlichen Zwischenräumen (19, 29, 39, 49) aufweist, aufweist,
b. Eindringen eines Klebstoffs (22) in die Spule mit sektorisierter Anordnung durch eine Außenfläche der Überlappungszone (12), so daß der Klebstoff (22) über wenigstens einen durchgehenden Verbindungsweg (15, 16, 17, 18, 30) in die zwischen aneinander angrenzenden Windungen der Zone mit regelmäßiger Schichtung (13) befindlichen Zwischenräume (19, 29, 39, 49) bis zur wenigstens einen Dichtfläche (14, 24, 34) eindringt.

2. Verfahren zur Herstellung einer Glasfaserspule gemäß Anspruch 1, bei dem das Motiv des Wickelns im Schritt a) vom vierpoligen oder achtpoligen Typ ist.

3. Verfahren zur Herstellung einer Glasfaserspule gemäß einem der Ansprüche 1 bis 2, bei dem die aneinander angrenzenden Windungen einer ersten Schicht so angeordnet sind, daß sie eine Rille zwischen aneinander angrenzenden Windungen bilden, und bei dem die Windungen einer anderen angrenzenden Schicht versetzt in der Rille der ersten Schicht in der Zone mit regelmäßiger Schichtung (13) angeordnet sind.

4. Verfahren zur Herstellung einer Glasfaserspule gemäß einem der Ansprüche 1 bis 3, bei dem die Achse (11) der Glasfaserspule vor dem Schritt b) horizontal angeordnet wird und die Überlappungszone (12) zur Spulenachse senkrecht angeordnet wird, und bei dem der Schritt b) einen Schritt bl) des Auftragens des Klebstoffs (22) auf die Überlappungszone (12) und dann einen Schritt b2) des Eindringens des Klebstoffs (22) zwischen die Windungen der Spule durch Schwerkraft und/oder Kapillarität und/oder Sog aufweist.

5. Verfahren zur Herstellung einer Glasfaserspule gemäß einem der Ansprüche 1 bis 4, bei dem die Glasfaserspule vor dem Schritt b) in einer Vakuumkammer (20) unter Vakuum gesetzt wird, damit die Zwischenräume (19, 29, 39, 49) zwischen den Windungen luftleer sind, und bei dem der Schritt b) einen Schritt des Auftragens des Klebstoffs (22) auf die Überlappungszone (12) unter Vakuum und dann eines Schritt des Aufhebens des Vakuums in der Vakuumkammer (20), damit der Klebstoff (22) aufgrund des Druckunterschieds zwischen der Vakuumkammer (20) und den zwischen den Windungen der Spule befindlichen Zwischenräumen (19, 29, 39, 49) zwischen die Windungen der Spule gesaugt wird, aufweist.

6. Glasfaserspule (10) mit symmetrischer Wicklung, die eine Achse (11) und eine Glasfaser aufweist, wobei die Glasfaser um eine Achse (11) der Spule von der Mitte der Glasfaser aus gewickelt ist, wobei das Wickeln der Glasfaser ein Motiv (Q) schafft, das eine gleiche Anzahl N Lagen (1, 2, 3, 4) jeder Hälfte der Glasfaser aufweist, wobei N eine natürliche ganze Zahl ist, wobei jede der Lagen (1, 2, 3, 4) eine Gesamtheit von Glasfaserwindungen und zwischen aneinander angrenzenden Windungen befindliche Zwischenräume (19, 29, 39, 49) aufweist, wobei die Windungen einer Lage von einer selben Hälfte der Glasfaser kommen und sich in einer selben Entfernung von der Achse (11) der Spule befinden,
**dadurch gekennzeichnet, daß**
die Wicklung eine Spule (10) mit sektorisierter Anordnung bildet, die einerseits eine Zone mit regelmäßiger Schichtung (13), bei der die Glasfaserwindungen einer Schicht und die Windungen der angrenzenden Schicht bzw. Schichten nebeneinander angeordnet sind, um wenigstens eine durchgehende Dichtfläche (14, 24, 34) zwischen zwei Schichten Windungen zu bilden, wobei die wenigstens eine Dichtfläche (14, 24, 34) das Durchfließen von Luft und/oder Klebstoff zwischen einer Außenfläche der Zone mit regelmäßiger Schichtung (13) und wenigstens einem zwischen den Windungen der Spule in der Zone mit regelmäßiger Schichtung (13) liegenden Zwischenraum (19, 29, 39, 49) verhindert, und andererseits eine Überlappungszone (12), in der sich Glasfaserabschnitte kreuzen, die verschiedene Windungen einer selben Schicht und/oder verschiedener Schichten der Wicklung verbinden, wobei die Überlappungszone (12) wenigstens einen durchgehenden Verbindungsweg (15, 16, 17, 18) zwischen einer Außenfläche der Spule in der Überlappungszone (12) und den zwischen aneinander angrenzenden Windungen der Zone mit regelmäßiger Schichtung (13) befindlichen Zwischenräumen (19, 29, 39, 49) aufweist, aufweist, und daß die Spule Klebstoff (22) aufweist, der in räumlich homogener Weise in den aneinander angrenzenden Windungen der Zone mit regelmäßiger Schichtung (13) befindlichen Zwischenräumen (19, 29, 39, 49) verteilt ist.

7. Glasfaserspule gemäß Anspruch 6, bei der das Motiv (Q) der Wicklung vom vierpoligen oder achtpoligen Typ ist.

8. Glasfaserspule gemäß Anspruch 6 oder 7, bei der sich das Motiv (Q) der Wicklung in einer zur Achse (11) der Spule quer verlaufenden Richtung periodisch wiederholt.

9. Glasfaserspule gemäß einem der Ansprüche 6 bis 8, bei der das Material des Klebstoffs unter den folgenden Materialien ausgewählt ist: Epoxidharz oder Polyacrylat.

10. Glasfaserspule gemäß einem der Ansprüche 6 bis 9, bei der die Glasfaser eine Monomode-Glasfaser, eine Glasfaser mit Polarisationsbewahrung, eine Mehrkern-Glasfaser ist.

11. Glasfaserinterferometer mit Sagnac-Ring, das wenigstens eine Glasfaserspule gemäß einem der Ansprüche 6 bis 10 aufweist.

## Claims

1. A method of making a symmetrical-winding coil (10) of optical fiber comprising the following steps:
a. symmetrically winding an optical fiber around an axis (11), the winding starting from a point of the optical fiber located at equal distance from the two ends of the optical fiber, the winding forming a pattern comprising a same number N of layers of each half of the optical fiber, where N is a natural integer, a layer comprising a set of turns of optical fibers and spaces (19, 29, 39, 49) located between adjacent turns, the turns of a layer coming from a same half of the optical fiber and being placed at a same distance from the coil axis (11), and said winding forming a coil (10) having a sectored arrangement comprising, on the one hand, a regular stacking area (13) in which the turns of optical fiber of a layer are juxtaposed to the turns of the adjacent layer(s), so as to form at least one continuous sealing surface (14, 24, 34) between two layers of adjacent turns, said at least one sealing surface (14, 24, 34) preventing the passage of air and/or of glue between an external surface of the regular stacking area (13) and at least one space (19, 29, 39, 49) located between the turns of the coil in the regular stacking area (13), and, on the other hand, an overlap area (12) in which portions of optical fiber linking different turns of a same layer and/or different layers of the winding cross each other, the overlap area (12) comprising at least one continuous path of communication (15, 16, 17, 18) between an external surface of the coil in the overlap area (12) and said spaces (19, 29, 39, 49) located between adjacent turns of the regular stacking area (13) ;
b. making a glue (22) infiltrate into the sectored-arrangement coil through an external surface of the overlap area (12) so that the glue (22) infiltrates through at least one continuous path of communication (15, 16, 17, 18, 30) into the spaces (19, 29, 39, 49) located between adjacent turns in the regular stacking area (13), up to said at least one sealing surface (14, 24, 34).

2. The method of making an optical fiber coil according to claim 1, wherein at step a) the pattern of the winding is of the quadrupolar or octopolar type.

3. The method of making an optical fiber coil according to one of claims 1 to 2, wherein the adjacent turns of a first layer are arranged so as to form a groove between adjacent turns, and wherein the turns of another adjacent layer are arranged in a staggered manner in the groove of the first layer in the regular stacking area (13).

4. The method of making an optical fiber coil according to one of claims 1 to 3, wherein, before step b) the axis (11) of the optical fiber coil is arranged horizontally and the overlap area (12) is arranged at the vertical of the coil axis, and wherein the step b) comprises a step b1) of applying the glue (22) to the overlap area (12), then a step b2) of making the glue (22) infiltrate between the turns of the coil, by gravity and/or by capillarity and/or by suction.

5. The method of making an optical fiber coil according to one of claims 1 to 4, wherein, before step b) the optical fiber coil is placed under vacuum in a vacuum chamber (20) so that the spaces (19, 29, 39, 49) between the turns of the coil are vacuumed, and wherein in the step b) comprises a step of applying glue (22) under vacuum to the overlap area (12); then a step of breaking the vacuum in the vacuum chamber (20), so as to suck the glue (22) between the turns of the coil due to a difference of pressure between the vacuum chamber (20) and the spaces (19, 29, 39, 49) located between the turns of the coil.

6. A symmetrical-winding optical fiber coil (10) having an axis (11) and comprising an optical fiber, said optical fiber being wound around the coil axis (11) from the middle of the optical fiber, the winding of the optical fiber forming a pattern (Q) comprising a same number N of layers (1, 2, 3, 4) of each half of the optical fiber, where N is a natural integer, each of the layers (1, 2, 3, 4) comprising a set of turns of optical fiber and spaces (19, 29, 39, 49) located between adjacent turns, the turns of a layer coming from a same half of the optical fiber and being placed at a same distance from the coil axis (11),
**characterized in that**:
said winding forms a coil (10) having a sectored arrangement comprising, on the one hand, a regular stacking area (13) in which the turns of optical fiber of a layer are juxtaposed to the turns of the adjacent layer(s) so as to form at least one continuous sealing surface (14, 24, 34) between two layers of turns, said at least one sealing surface (14, 24, 34) preventing the passage of air and/or of glue between an external surface of the regular stacking area (13) and at least one space (19, 29, 39, 49) located between the turns of the coil in the regular stacking area (13) and, on the other hand, an overlap area (12) in which portions of optical fiber linking different turns of a same layer and/or different layers of the winding cross each other, the overlap area (12) comprising at least one continuous path of communication (15, 16, 17, 18) between an external surface of the coil in the overlap area (12) and said spaces (19, 29, 39, 49) located between adjacent turns of the regular stacking area (13) and **in that** the coil includes glue (22) distributed in a spatially homogeneous manner in said spaces (19, 29, 39, 49) located between adjacent turns of the regular stacking area (13) of the coil.

7. The optical fiber coil (10) according to claim 6, wherein the pattern (Q) of the winding is of the quadrupolar or octopolar type.

8. The optical fiber coil according to claim 6 or 7, wherein the pattern (Q) of the winding is repeated periodically in a direction transverse to the coil axis (11).

9. The optical fiber coil according to one of claims 6 to 8, wherein the material of the glue is chosen among the following materials: epoxy or acrylate polymer.

10. The optical fiber coil according to one of claims 6 to 9, wherein the optical fiber is a single-mode optical fiber, a polarization- maintaining optical fiber, a multi-core optical fiber.

11. A Sagnac-ring fiber-optic interferometer comprising at least one optical fiber coil according to one of claims 6 to 10.
